# EUROPEAN PATENT APPLICATION

(11) **EP 2 128 292 A1**
(43) Date of publication of application: **02.12.2009**
(21) Application number: 08721946.5
(22) Date of filing: 12.03.2008
(51) Int. Cl.: C22C 38/00, C21D 6/00, C22C 45/02, H01F 1/14, H01F 1/153

(54) **IRON-BASED SOFT MAGNETIC ALLOY, THIN RIBBON OF AMORPHOUS ALLOY, AND MAGNETIC PART**

(30) Priority: 16.03.2007 JP 2007068869
(71) Applicant: Hitachi Metals, Ltd., Minato-ku Tokyo 105-8614 (JP)
(72) Inventor: YOSHIZAWA, Yoshihito, Kumagaya-shi Saitama 360-0843 (JP); OHTA, Motoki, Kumagaya-shi Saitama 360-0843 (JP)
(74) Representative: Strehl Schübel-Hopf & Partner
(86) International application number: PCT/JP2008/054530
(87) International publication number: WO 2008/114665

(57) **Abstract**

An iron-based soft magnetic alloy which is for use in various transformers, various choke coils, noise suppression measures, power supply parts, laser power supplies, pulsed-power magnetic parts for accelerators, various motors, various generators, magnetic shields, antennas, sensors, etc.; a thin ribbon of an amorphous alloy for producing the magnetic alloy; and a magnetic part comprising the magnetic alloy. The magnetic alloy comprises, in terms of at.%, copper in an amount (x) satisfying 0.1 ≤ x ≤ 3, boron in an amount (y) satisfying 10 ≤ y ≤ 20, and iron and impurities as the remainder. It contains, in terms of mass%, the following impurities: up to 0.01% aluminum, 0.001-0.05% sulfur, 0.01-0.5% manganese, 0.001-0.1% nitrogen, and up to 0.1% oxygen. The magnetic alloy has a structure at least part of which comprises a crystal phase having a crystal grain diameter of 60 nm or smaller (excluding 0).

## Description

### TECHNICAL FIELD

The present invention relates to an Fe-based soft magnetic alloy that is used for various transformers, various choke coils, noise-suppression measures, power supply parts, laser power supplies, pulsed-power magnetic parts for accelerators, various motors, various generators, magnetic shields, antennas, sensors and so on, a thin ribbon of an amorphous alloy for producing the magnetic alloy, and a magnetic part that uses the magnetic alloy.

### BACKGROUND ART

Examples of a soft magnetic material that is used for various transformers, various choke coils, noise-suppression measures, power supply parts, laser power supplies, pulsed-power magnetic parts for accelerators, various motors, various generators, magnetic shields, antennas, sensors and so on include silicon steels, permalloy, ferrites, amorphous alloys, and Fe-based nanocrystalline alloy materials.
A silicon steel sheet is a cheap material with a high magnetic flux density, but it has a problem in that the magnetic core loss is large for the use in high frequency. From the viewpoint of a producing method, it is very difficult to produce a thin silicon steel sheet equivalent to an amorphous ribbons, and, since an eddy current loss is large, when it is used in a high frequency region, a core loss is disadvantageously large. In a commercial frequency as well, a hysteresis loss and an eddy current loss are larger than those of an amorphous alloy and there is a problem that, in a low frequency region including a commercial frequency as well, an iron loss is large. A ferrite material is high in electric resistivity and excellent in high frequency properties but a problem thereof is that a saturation magnetic flux density is low and temperature properties are poor. Accordingly, a ferrite material is disadvantageous because it tends to magnetically saturate for high power use large in operating magnetic flux density.
A Co-based amorphous alloy has a problem that a low saturation magnetic flux density is 1 T or less for a practical material and thermal stability is poor. Accordingly, when the Co-based amorphous alloy is used in high power use, there is a problem that a part becomes larger and a magnetic core loss increases with time.
An Fe-based amorphous soft magnetic alloy such as described in PATENT DOCUMENT 1 has a low coercive force and shows soft magnetic properties more excellent than silicon steel. However, the Fe-based amorphous soft magnetic alloy is larger in magnetostriction; accordingly, there are problems that high magnetic permeability comparable to the Co-based amorphous alloy is not obtained, magnetic properties are deteriorated by stress and sound noise is large in a usage where a current of an audiofrequency band overlaps.
A nanocrystalline soft magnetic alloy material such as described in PATENT DOCUMENT 2 has been developed. The nanocrystalline soft magnetic material enables to obtain a relatively high saturation magnetic flux density and excellent soft magnetic properties and is being forwarded in putting into practical use as an iron core material for choke coils and a high frequency transformers.

PATENT DOCUMENT 1: JP-A-05-140703
PATENT DOCUMENT 2: JP-A-64-79342

### DISCLOSURE OF THE INVENTION

### PROBLEMS TO BE SOLVED BY THE INVENTION

The nanocrystalline soft magnetic material is produced by annealing a thin ribbon of an amorphous alloy as a starting material to crystallize. However, there is a problem that a thin ribbon of an amorphous alloy produced with an industrial raw material for a nanocrystalline soft magnetic material is difficult to produce more than a thin ribbon of an amorphous alloy used as an amorphous magnetic material. Furthermore, a wide and long thin ribbon of an amorphous alloy that is used to produce the nanocrystalline soft magnetic material is, when it is produced with an industrial raw material, difficult to produce and poor in yield of thin ribbon production and processing yield; accordingly, there is a problem of high price. Still furthermore, there is also a problem that the nanocrystalline soft magnetic alloy produced from a wide thin ribbon of an amorphous alloy like this is large in variation of magnetic properties.

The present invention intends to provide an Fe-based soft magnetic alloy that is easy to produce a wide alloy thin ribbon suitable for mass-production in an Fe-based nanocrystalline soft magnetic material and to produce an alloy thin ribbon and is excellent in soft magnetic properties, a thin ribbon of an amorphous alloy for producing the Fe-based soft magnetic alloy, and a magnetic part that uses the Fe-based soft magnetic alloy.

### MEANS FOR SOLVING THE PROBLEMS

The present inventors have found, after studying hard, that an Fe-based soft magnetic alloy that includes, in terms of atomic percent, Cu in an amount (x) satisfying 0.1 ≤ x ≤ 3, B in an amount (y) satisfying 10 ≤ y ≤ 20, and Fe and impurities as the remainder, as the impurities, in terms of percent by mass, Al: 0.01% or less, S: 0.001 to 0.05%, Mn: 0.01 to 0.5%, N: 0.001 to 0.1%, and O: 0.1% or less, wherein at least a part of the structure thereof contains a crystal phase having a crystal grain diameter of 60 nm or less (not including 0) makes it easy to produce a wide and long thin ribbon of an amorphous alloy and that a nanocrystalline alloy produced from the alloy thin ribbon shows excellent soft magnetic properties, less variation in magnetic properties and excellent in mass-productivity, and have conceived the present invention.

In the present invention, the amount of Cu (x) needs to satisfy 0.1 ≤ x ≤ 3. When the amount of Cu (x) is less than 0.1%, the soft magnetic properties unfavorably deteriorate. On the other hand, when the amount of Cu (x) exceeds 3%, an alloy becomes remarkably brittle and makes it difficult to continuously produce a thin ribbon. The amount of Cu (x) is preferably 1 < x ≤ 2, and in the range particularly excellent soft magnetic properties are obtained. The amount of B (y) needs to satisfy 10 ≤ y ≤ 20. This is because in the case where the amount of B (y) is less than 10 atomic %, when a thin ribbon is produced by quenching, an amorphous phase is difficult to form, and, even when an annealing is applied, soft magnetic properties are not obtained, and in the case where the amount of B (y) exceeds 20 atomic %, not only the saturation magnetic flux density rapidly deteriorates but also the soft magnetic properties deteriorate. An industrial raw material contains impurities and some of the impurities adversely affect the producibility and magnetic properties; accordingly, it has been found that it is necessary to limit the content thereof to a certain range. It has been found that, when a raw material is selected and a melt is refined to control impurities, the production can be rendered easier and the variation in magnetic properties can be made smaller.

In the present invention, Al as an impurity needs to be not more than 0.01 % by mass or less. This is because when Al exceeds 0.01 %, large crystalline grains tend to be formed on a surface of a thin ribbon to result in the deterioration of soft magnetic properties. S has the effect of inhibiting large crystal grains from growing on a surface of a thin ribbon. However, S needs to be in the range of 0.001 % to 0.05 % in terms of percent by mass. This is because when S is less than 0.001 %, a grain diameter of a crystal on a surface is not effectively inhibited from becoming coarse, and, on the other hand, when S exceeds 0.05%, a thin ribbon is rendered unfavorably brittle. Mn effectively improves thermal stability and the amount of Mn needs to be, in terms of percent by weight, in the range of 0.01% to 0.5%. This is because when the amount of Mn is less than 0.01%, there is no advantageous effect, and, on the other hand, when it exceeds 0.5%, a melt and a refractory tend to react during production of a thin ribbon to unfavorably result in a shorter lifetime of the refractory. N works so as to expand an optimum annealing condition. However, when N is contained less than 0.001% by weight, there is no advantageous effect. On the other hand, when N is contained exceeding 0.1% by weight, the soft magnetic properties unfavorably deteriorate. O causes inclusions or a surface modification to affect the magnetic properties; accordingly, the amount of O needs to be 0.1% by weight or less. Also in the present invention of other compositions described below, the reasons for limiting the impurities are same.

Furthermore, a second aspect of the present invention involves an Fe-based soft magnetic alloy that includes, in terms of atomic percent, Cu in an amount (x) satisfying 0.1 ≤ x ≤ 3, B in an amount (y) satisfying 4 ≤ y ≤ 20, X in an amount (z) satisfying 0 < z ≤ 20 and 10 ≤ y + z ≤ 30, and Fe and impurities as the remainder (wherein, X represents at least one element selected from the group consisting of Si, C, Ge, Ga, Be and P), and, as the impurities, in terms of percent by mass, Al: 0.01% or less, S: 0.001 to 0.05%, Mn: 0.01 to 0.5%, N: 0.001 to 0.1%, and O: 0.1% or less, wherein at least a part of the structure thereof contains a crystal phase having a crystal grain diameter of 60 nm or less (not including 0).

In the second aspect of the present invention, the amount of Cu (x) needs to satisfy 0.1 ≤ x ≤ 3. When the amount of Cu (x) is less than 0.1%, the soft magnetic properties unfavorably deteriorate. On the other hand, when the amount of Cu (x) exceeds 3%, an alloy becomes remarkably brittle and makes it difficult to continuously produce a thin ribbon. The amount of Cu (x) is preferably 1 < x ≤ 2, and in the range particularly excellent soft magnetic properties are obtained. The amount of B (y) needs to satisfy 4 ≤ y ≤ 20. Furthermore, X represents at least one element selected from the group consisting of Si, C, Ge, Ga, Be and P and is effective in making a production of a thin ribbon easier and in controlling the magnetic properties. The amount of X (z) needs to satisfy 0 < z ≤ 20. The total of the amount of B and the amount of X needs to satisfy 10 ≤ y + z ≤ 30. This is because when the amount of B (y) is less than 4 atomic % or the total of the amount of B and the amount of X is less than 10 atomic %, an amorphous phase is difficult to form when a thin ribbon is produced by quenching, and, even when an annealing is conducted, soft magnetic properties are not obtained; on the other hand, when the amount of B (y) exceeds 20 atomic % or the total of the amount of B and the amount of X exceeds 30 atomic %, not only the saturation magnetic flux density rapidly decreases but also soft the magnetic properties unfavorably deteriorate.

As mentioned above, the Fe-based soft magnetic alloy makes it easy to produce a wide and long thin ribbon of an amorphous alloy, and, a nanocrystalline alloy produced from the thin alloy ribbon is excellent in soft magnetic properties, less variation in magnetic properties and excellent in mass-productivity.

A third aspect of the present invention involves an Fe-based soft magnetic alloy that includes, in terms of atomic percent, Cu in an amount (x) satisfying 0.1 ≤ x ≤ 3, B in an amount (y) satisfying 4 ≤ y ≤ 20, X in an amount (z) 0 ≤ z ≤ 20, and M in an amount (a) satisfying 10 ≤ y + Z + a ≤ 30 (wherein, X represents at least one element selected from the group consisting of Si, C, Ge, Ga, Be and P, and M is at least one element selected from the group consisting of Ti, Zr, Hf, V, Nb, Ta, Mo and W), and, as the impurities, in terms of percent by mass, Al: 0.01% or less, S: 0.001 to 0.05%, Mn: 0.01 to 0.5%, N: 0.001 to 0.1%, and O: 0.1% or less, wherein at least a part of the structure thereof contains a crystal phase having a crystal grain diameter of 60 nm or less (not including 0).

In the present invention, the amount of Cu (x) needs to satisfy 0.1 ≤ x ≤ 3. When the amount of Cu (x) is less than 0.1%, the soft magnetic properties unfavorably deteriorate. On the other hand, when the amount of Cu (x) exceeds 3%, an alloy becomes remarkably brittle and makes it difficult to continuously produce a thin ribbon. The amount of Cu (x) is preferably 0.4 ≤ x ≤ 2, and in the range particularly low coercive force and high magnetic permeability are obtained. The amount of B (y) needs to satisfy 4 ≤ y ≤ 20. Furthermore, X represents at least one element selected from the group consisting of Si, C, Ge, Ga, Be and P and is effective in making a production of a thin ribbon easier and in controlling the magnetic properties. The amount of X (z) needs to satisfy 0 ≤ z ≤ 20. M is at least one element selected from the group consisting of Ti, Zr, Hf, V, Nb, Ta, Mo and W, and effective in microparticulating crystal grains and more improving the soft magnetic properties. The total of the amount of B, the amount of X and the amount of M needs to satisfy 10 ≤ y + z + a ≤ 30. This is because when the amount of B (y) is less than 4 atomic % or the total y + z + a of the amount of B, the amount of X and the amount of M is less than 10 atomic %, an amorphous phase is difficult to form when a thin ribbon is produced by melt quenching, and, even when an annealing is conducted, soft magnetic properties are not obtained; on the other hand, when the amount of B (y) exceeds 20 atomic % or the total y + z + a of the amount of B, the amount of X and the amount of M exceeds 30 atomic %, not only the saturation magnetic flux density rapidly decreases but also the soft magnetic properties unfavorably deteriorate.

The Fe-based soft magnetic alloy makes it easy to produce a wide and long thin ribbon of an amorphous alloy, and, a nanocrystalline alloy produced from the alloy thin ribbon is excellent in soft magnetic properties, less variation in magnetic properties and excellent in mass-productivity.

In the case where the X is Si, by adding Si, a temperature where a ferromagnetic compound phase large in magnet crystalline anisotropy starts precipitating becomes higher to preferably result in expanding an optimum annealing temperature range. Furthermore, when Si is added, a more preferable result such that magnetostriction is reduced and the soft magnetic properties are improved is obtained.

When the Fe-based soft magnetic alloy contains P and C and the content thereof in terms of percent by weight is P: 0.001 to 0.5% and C: 0.003 to 2%, the magnetic properties vary less with time to result in a more preferable result.

The Fe-based soft magnetic alloy may contain at least one element selected from Co and Ni by less than 50 atomic % with respect to the amount of Fe. When Co or Ni is contained, larger induced magnetic anisotropy can be imparted to enable easy control of the shape of a magnetization curve. However, when the content of Co and Ni is 50 atomic % or more with respect to the amount of Fe, the soft magnetic properties unfavorably remarkably deteriorate.

The magnetic alloy may contain, with respect to the amount of Fe, 5 atomic % or less of at least one element selected from the group consisting of Cr, Re, platinum group elements, Au, Ag, Zn, In, Sn, As, Sb, Sb, Bi, Y and rare earth elements. When the magnetic alloy contains the elements, various advantages such that corrosion resistance is improved, annealing temperature range is expanded, and heat resistance is improved are obtained.

In order to obtain a homogeneous microstructure in the soft magnetic nanocrystalline alloy of the present invention, it is important to be able to obtain a structure having an amorphous phase as a main phase at the time point when a thin ribbon of an alloy is prepared by rapid melt quenching after a raw material is melted. In the present invention, nanoscale fine crystal grains may be present dispersed in a thin ribbon of an amorphous alloy prepared by rapid melt quenching. However, a structure where crystal grains having a grain diameter of 10 nm or less are dispersed in an amorphous matrix phase of a thin ribbon of an alloy or an amorphous single phase is desirable. Thereafter, an annealing is applied in a temperature range equal to or more than a crystallization temperature to form a structure where crystal grains of a body-centered cubic structure having a crystal grain diameter of 60 nm or less are dispersed at a volume fraction of 30% or more in an amorphous matrix phase. When the nanocrystalline grain phase is contained 30% or more by volume fraction, magnetostriction is reduced more than before annealing and the soft magnetic properties as well are improved. Furthermore, when the nanocrystalline grain phase is contained 50% or more by volume fraction, the soft magnetic properties are further improved.

The volume ratio of crystal grains is obtained by a linear analysis method, that is, an arbitrary straight line is assumed in a microscope structure, the length of a test line is represented by Lt and the length Lc of a line occupied by a crystal phase is measured, and the ratio L_{L} = L_{c}/Lₜ of the length of the line occupied by crystal grains is obtained. Here, the volume ratio of crystal grains is Vᵥ = L_{L}. The crystal grain diameter of a crystal grain present in an alloy after annealing is preferably 60 nm or less. This is because when the crystal grain diameter exceeds 60 nm, the soft magnetic properties unfavorably remarkably deteriorate. The crystal grain diameter is particularly preferably 5 nm to 30 nm and thereby particularly excellent soft magnetic properties can be obtained.

According to a specific producing method, a melt having the foregoing composition is rapidly cooled at a cooling speed of 100°C/sec or more and more preferably 10⁵°C/sec or more by a quenching technique such as a single roll method to prepare once an alloy having an amorphous phase as a main phase, followed by processing and annealing to form a nanocrystalline structure having an average grain diameter of 60 nm or less. An amorphous phase before annealing may contain a crystal phase. However, when crystal grains are present, a structure where nanoscale crystal grains having a grain diameter of 10 nm or less are dispersed is desirable. Preparation of a thin ribbon by a quenching technique such as a single roll method and annealing are conducted under air, in an atmosphere of Ar, He, nitrogen, carbon monoxide or carbon dioxide or under reduced pressure. When an annealing is conducted under a magnetic field, the soft magnetic properties can be improved owing to induced magnetic anisotropy. In this case, in magnetic field annealing for imparting induced magnetic anisotropy, an annealing is conducted with a magnetic field applying for a part of period or an entire period during annealing. A magnetic field being applied may be any one of a direct current, an alternating current, and a repetitively pulsed magnetic field. When a magnetic field being applied is set at a strength equal to or more than the degree where an alloy magnetically saturates, an excellent result is obtained. By annealing under a magnetic field, a material having a B-H loop that has a high squareness ratio and is excellent in squareness or having a B-H loop that has a low squareness ratio and is excellent in linearity is obtained. An annealing may be conducted in air, vacuum or an inert gas such as Ar or nitrogen, an annealing in an inert gas being particularly desirable. An annealing is conducted, though depending on the composition, usually in the range of 350°C to 650°C. A period of time for holding at a constant temperature is usually 24 hr or less from the viewpoint of mass productivity, 4 hr or less being preferred, 1 min to 1 hr being particularly desirable. The average rate of temperature rise of an annealing is preferably in the range of 0.1°C/min to 10000°C/min and more preferably 100°C/min or more, and thereby the coercive force is inhibited from increasing. An annealing may be conducted in multi-stages or a plurality of times without restricting to one stage. Furthermore, a method where a current is directly passed through an alloy to annealing it with Joule heat or a method where an annealing is conducted under stress to impart induced magnetic anisotropy to control a B-H loop shape may be adopted.

An annealing of a soft magnetic alloy of the present invention intends to form a nanocrystalline structure. By controlling two parameters of time and temperature, the microstructure or magnetic properties are controlled. Even a high temperature annealing, when conducted for a very short period of time, has advantages. These are that crystal grains are inhibited from growing, a coercive force is made smaller, a magnetic flux density in a low magnetic field is improved and a hysteresis loss is reduced. Furthermore, control of the rate of temperature rise, an annealing in several stages involving maintenance for a certain period of time at various temperatures, or the like can also control nucleus generation. When crystal grains are grown by maintenance at a temperature lower than the crystallization temperature for a certain period of time to impart an enough time to generate nuclei followed by an annealing involving maintenance for less than 1 hr at a temperature higher than the crystallization temperature, crystal grains inhibit each other from growing; accordingly, a homogeneous and fine crystalline structure is obtained.

When a soft magnetic nanocrystalline alloy of the present invention is treated, as required, by covering a surface of an alloy thin ribbon with a powder or film of SiO₂, MgO, Al₂O₃ or the like, by applying a surface treatment by a chemical conversion treatment to form an insulating layer, by forming an oxide insulating layer on a surface by anodic oxidation to apply interlayer insulation, or the like, a preferable result is obtained. This is because an eddy current in high frequency flowing over layers in particular is inhibited from adversely affecting to improve a magnetic core loss in high frequency. The advantage is particularly remarkable in a magnetic core formed of a wide thin ribbon excellent in a surface state. Furthermore, when a magnetic core is prepared from a soft magnetic alloy of the present invention, as required, impregnation or coating may be applied as well. A soft magnetic alloy of the present invention most exhibits its performance in a product where a pulse current flows as a high frequency application. However, the soft magnetic alloy of the present invention may be used in usage as a sensor or a low frequency magnetic part as well. In particular, the soft magnetic alloy of the present invention is capable of exhibiting excellent properties in applications where a magnetic saturation is problematic; accordingly, it is particularly suitable for an application in high-power power electronics.
In a soft magnetic alloy of the present invention, in which an annealing is applied with a magnetic field applying in a direction substantially vertical to the direction of magnetization during usage, a magnetic core loss smaller than a conventional material having high saturation magnetic flux density is obtained. Furthermore, a soft magnetic alloy of the present invention is capable of giving excellent properties even in a thin film or powder.

In at least a part or an entirety of a soft magnetic alloy of the present invention, crystal grains having an average crystal grain diameter of 60 nm or less are formed. The crystal grains are desirably contained at a ratio of 30% or more of a structure, more desirably 50% or more, and particularly desirably 60% or more. A particularly desirable average grain diameter is 30 nm or less, and, in the range, particularly low coercive force and magnetic core loss are obtained.

Nanocrystalline grains formed in a soft magnetic alloy of the present invention have a crystal phase of a body-centered cubic structure (bcc) mainly made of Fe and may further form a solid solution with Co, Ni, Si, B, Ge, Zr or the like. Furthermore, the nanocrystalline grains may contain an ordered lattice. The remainder other than the crystal phase is mainly made of an amorphous phase. However, an alloy substantially made of a crystal phase alone as well is included in the present invention. A phase of a face-centered cubic structure (fcc phase) containing Cu or Au may be present.

An alloy having a structure where nanoscale crystal grains are dispersed in an amorphous matrix phase where an amorphous phase is present around a crystal grain is high in resistivity, inhibits crystal grains from growing and is improved in high frequency magnetic properties; accordingly, a desirable result is obtained.

The soft magnetic alloy of the present invention exhibits a lower coercive force and a lower magnetic core loss in a case where a compound phase is not contained. However, the soft magnetic alloy of the present invention may partially contain a compound phase.

Furthermore, a thin ribbon of an amorphous alloy having a same composition with the Fe-based soft magnetic alloy corresponds to the present invention. A magnetic part that uses the Fe-based soft magnetic alloy as well is included in the present invention. When a magnetic part is constituted of the Fe-based soft magnetic alloy of the present invention, a high performance or miniaturized magnetic part is realized suitable for various reactors for a large current such as an anode reactor, choke coils for an active filter, smoothing choke coils, various transformers, magnetic shields, noise-suppression parts such as a magnetic shield material, laser power supplies, pulsed-power magnetic parts for accelerators, motors, generators and so on.

### ADVANTAGES OF THE INVENTION

According to the present invention, an Fe-based soft magnetic alloy that is used for various transformers, various choke coils, noise-suppression measures, power supply parts, laser power supplies, pulsed-power magnetic parts for accelerators, various motors, various generators, magnetic shields, antennas, sensors and so on, a thin ribbon of an amorphous alloy for producing the magnetic alloy, and a magnetic part that uses the magnetic alloy are realized; accordingly, the present invention is remarkable in its advantages.

### BEST MODE FOR CARRYING OUT THE INVENTION

In what follows, the present invention will be described with reference to Examples. However, the present invention is not restricted thereto.

### (Example 1)

An molten alloy represented by Cu: 1.5 atomic %, B: 14 atomic %, Si: 4 atomic % and Fe and impurities as the remainder was quenched by a single roll method, thereby a thin ribbon of the amorphous alloy, which had a width of 25 mm and a thickness of 21 µm, was obtained. As the result of X-ray diffraction and a transmission electron microscope observation, it was confirmed that, in the thin ribbon of the amorphous alloy, nanoscale very fine crystal grains having a grain diameter of less than 10 nm were formed at a volume fraction of less than 30%. The crystal grain is considered a solid solution phase mainly having a body-centered cubic structure (bcc structure) with Fe as a main component. Impurities of the thin ribbon of the alloy were analyzed and confirmed that the content of each was as follows: in terms of percent by mass, Al: 0.001%, S: 0.0025%, Mn: 0.15%, N: 0.0047%, and O: 0.008%. Next, the thin ribbon of the amorphous alloy was cut into a length of 120 mm, followed by heating up to 430°C at a rate of temperature rise of 200°C/min and keeping there for 1 hr, further followed by cooling in air after taking out of a furnace. An annealed sample was subjected to X-ray diffraction and a structure observation with a transmission electron microscope.
It was found that a phase of nanocrystalline grains having a grain diameter of substantially 25 nm and a bcc structure was present at a volume fraction of 50% or more in an amorphous matrix phase. Then, the sample was subjected to a magnetic measurement. A magnetic flux density roughly saturates at a magnetic field of 8000 A/m and the magnetic flux density at 8000 A/m is referred to as Bs. A saturation magnetic flux density Bs was 1.83 T. Then, 25 samples were cut out of the prepared thin ribbon and subjected to an annealing to investigate variation in coercive force. The coercive force Hc was 6.1 to 6.7 A/m. When a magnetic wound core having an outer diameter of 100 mm and an inner diameter of 90 mm was prepared from the thin ribbon of an amorphous alloy, there was found no breakdown. For the purpose of comparison, an alloy having impurity contents outside of the present invention was prepared and compared. It was found that, in terms of % by weight, Al: 0.02%, S: 0.1%, O: 0.2%, Mn: 0.8% and N: 0.15%. A saturation magnetic flux density Bs was 1.81 T. Furthermore, 25 samples were sampled from the prepared thin ribbon and annealed, followed by investigating variation in the coercive force in the longitudinal direction. The coercive force Hc was 6.9 to 9.7 A/m. When a magnetic wound core having an outer diameter of 100 mm and an inner diameter of 90 mm was prepared from the thin ribbon of the amorphous alloy, there was found breakdown during preparation of a magnetic wound core. As mentioned above, it was confirmed that an Fe-based soft magnetic alloy/thin ribbon of the amorphous alloy of the present invention is more suitable for a mass-production than an Fe-based soft magnetic alloy/thin ribbon of an amorphous alloy other than the present invention, is easier in a production of a wide alloy thin ribbon and processing of an alloy thin ribbon, and excellent in soft magnetic properties.

### (Example 2)

Each of molten alloys having various compositions shown in Table 1 was quenched by a single roll method, and thereby substantially 5 kg of a thin ribbon of an amorphous alloy having a width of 30 mm and a thickness of substantially 20 µm was obtained. Whether there were crystal grains in the alloy thin ribbon or not and crystal grain diameters thereof were investigated by use of X-ray diffraction, and thereby the alloy thin ribbons were found made of an amorphous single phase or a structure where crystal grains having a grain diameter of less than 10 nm were dispersed in an amorphous phase. From each of the alloy thin ribbons, 25 samples were sampled, followed by annealing in the range of 370°C to 460°C, further followed by evaluating a coercive force after annealing with a B-H tracer. The prepared thin ribbon of the amorphous alloy was wound into an outer diameter of 50 mm and an inner diameter of 45 mm and thereby breakdown of the thin ribbon when a coil magnetic core was prepared was investigated. It was found that the annealed magnetic alloys all contained in at least a part of the structure thereof crystal grains having a crystal grain diameter of 60 nm or less (not including 0). Furthermore, a nanocrystalline grain phase was present at a volume fraction of 50% or more in an amorphous matrix phase.
In Table 1, impurity components, the presence of breakdown of a thin ribbon during preparation of magnetic wound cores and ranges of coercive forces after annealing of 25 samples are shown. The thin ribbons of amorphous alloys of the present invention are more unlikely to break during processing than an alloy thin ribbon other than the present invention, less variation in coercive force after treatment in the Fe-based alloys of the present invention, and excellent in mass-productivity and soft magnetic properties.

**Table 1**

| | No. | Composition (atomic%) | Impurity component (% by mass) | | | | | Breakdown | Coercive force H_{c} (A/m) |
|---|---|---|---|---|---|---|---|---|---|
| | | | Al | S | Mn | N | O | | |
| Examples of Present Invention | 1 | (Fe+impurity)_{bal.}Cu_{1.35}B_{14.1} | 0.008 | 0.0055 | 0.06 | 0.0047 | 0.0080 | No | 7.0-7.6 |
| | 2 | (Fe+impurity)_{bal.}Cu_{1.25}B_{13.2}Si_{8.2} | 0.007 | 0.0050 | 0.05 | 0.0030 | 0.0020 | No | 6.5-7.3 |
| | 3 | (Fe+impurity)_{bal.}Cu_{1.6}B_{13.1}Si_{7.3} | 0.001 | 0.0025 | 0.15 | 0.0011 | 0.0102 | No | 6.4-7.2 |
| | 4 | (Fe+impurity)_{bal.}Cu_{1.25}B_{14.2}P_{1.1} | 0.010 | 0.05 | 0.18 | 0.0112 | 0.0121 | No | 5.8-6.6 |
| | 5 | (Fe+impurity)_{bal.}Cu_{1.35}B_{14.1}Si_{3.0} | 0.005 | 0.0011 | 0.03 | 0.0010 | 0.0015 | No | 6.8-7.5 |
| | 6 | (Fe+impurity)_{bal.}Cu_{1.5}B_{12.2}Si_{6.1} | 0.006 | 0.0052 | 0.23 | 0.0068 | 0.0091 | No | 10.6-12.3 |
| | 7 | (Fe+impurity)_{bal}.Cu_{1.31}B_{13.1}P_{1.1} | 0.007 | 0.0010 | 0.25 | 0.0075 | 0.0090 | No | 6.0-6.8 |
| | 8 | (Fe+impurity)_{bal.}Cu_{1.35}B_{14.0}C_{1.0} | 0.008 | 0.0032 | 0.30 | 0.0055 | 0.0113 | No | 7.8-8.5 |
| | 9 | (Fe+impurity)_{bal.}Cu_{1.61}B_{13.9}Si_{6.1} | 0.002 | 0.0041 | 0.16 | 0.0061 | 0.0132 | No | 6.2-6.9 |
| | 10 | (Fe+impurity)_{bal.}Cu_{1.35}B_{13.1}Si_{5.1} | 0.003 | 0.0050 | 0.19 | 0.0046 | 0.0051 | No | 6.1-6.8 |
| | 11 | (Fe+impurity)_{bal.}Cu_{1.60}B_{15.1}Si_{6.0} | 0.004 | 0.0053 | 0.12 | 0.0049 | 0.0082 | No | 7.5-8.2 |
| | 12 | (Fe+impurity)_{bal.}Cu_{1.51}B_{15.0}Si_{5.0}Ga_{0.1} | 0.005 | 0.0051 | 0.10 | 0.0051 | 0.0089 | No | 9.5-10.2 |
| | 13 | (Fe+impurity)_{bal.}CO_{5.5}Cu_{1.51}B₁₅.₀Si_{5.0}P_{0.1} | 0.006 | 0.0048 | 0.07 | 0.0061 | 0.0079 | No | 10.1-10.8 |
| | 14 | (Fe+impurity)_{bal.}Ni_{5.6}Cu_{1.51}B_{13.0}Si_{5.0}C_{0.5} | 0.006 | 0.0045 | 0.08 | 0.0052 | 0.0083 | No | 9.8-10.5 |
| | 15 | (Fe+impurity)_{bal.}Cu_{1.50}B_{15.1}Si_{5.1}Au_{0.1} | 0.004 3 | 0.004 | 0.11 | 0.0045 | 0.0088 | No | 6.7-7.4 |
| | 16 | (Fe+impurity)_{bal.}Cu_{1.50}B_{15.0}Si_{4.8}Cr_{0.3} | 0.007 | 0.0046 | 0.17 | 0.0035 | 0.0091 | No | 7.3-8.1 |
| | 17 | (Fe+impurity)_{bal.}Cu_{1.50}B_{15.0}Si_{4.8}Re_{0.1} | 0.008 | 0.0047 | 0.04 | 0.0041 | 0.0092 | No | 7.2-7.9 |
| | 18 | (Fe+impurity)_{bal.}Cu_{1.45}B_{13.0}Si_{4.8}Pd_{0.5} | 0.008 | 0.0051 | 0.06 | 0.0037 | 0.0078 | No | 6.9-7.5 |
| | 19 | (Fe+impurity)_{bal.}Cu_{1.46}B_{13.0}Si_{4.9}Pt_{0.4} | 0.009 | 0.0053 | 0.08 | 0.0044 | 0.0081 | No | 6.8-7.4 |
| | 20 | (Fe+impurity)_{bal.}Cu_{1.46}B_{13.0}Si_{4.9}Sn_{0.1} | 0.010 | 0.0055 | 0.10 | 0.0051 | 0.0085 | No | 7.1-7.8 |
| | 21 | (Fe+impurity)_{bal.}Cu_{1.45}B_{14.0}Si_{5.0}In_{0.1} | 0.005 | 0.0052 | 0.12 | 0.0046 | 0.0088 | No | 8.1-8.8 |
| | 22 | (Fe+impurity)_{bal.}Cu_{1.45}B_{14.3}Si_{5.0}Zn_{0.1} | 0.006 | 0.0053 | 0.13 | 0.0480 | 0.0432 | No | 8.2-8.8 |
| | 23 | (Fe+impurity)_{bal.}Cu_{1.45}B_{14.3}Si_{5.0}Ge_{0.5} | 0.010 | 0.0502 | 0.5 | 0.0995 | 0.0996 | No | 6.9-7.8 |
| Comparative Example | 24 | (Fe+impurity)_{bal.}Cu_{1.35}B_{14.0} | 0.112 | 0.1110 | 0.05 | 0.0040 | 0.0110 | Yes | 215-320 |
| | 25 | (Fe+impurity)_{bal.}Cu_{1.31}B_{14.3}Si_{2.0} | 0.110 | 0.0713 | 0.92 | 0.0123 | 0.0121 | Yes | 265-395 |
| | 26 | (Fe+impurity)_{bal.}Cu_{1.52}B_{15.1} | 0.112 | 0.0612 | 0.18 | 0.0110 | 0.0101 | Yes | 352-431 |
| | 27 | (Fe+impurity)_{bal.}Cu_{1.35}B_{13.2}Si₅.₀ | 0.170 | 0.0810 | 0.13 | 0.1802 | 0.1104 | Yes | 232-298 |
| | 28 | (Fe+impurity)_{bal.}Cu_{1.51}B_{16.1}Si_{2.1} | 0.150 | 0.0921 | 0.75 | 0.0089 | 0.1102 | Yes | 282-320 |
| | 29 | (Fe+impurity)_{bal.}Cu_{1.69}B_{14.1}Si_{6.1} | 0.121 | 0.0872 | 0.16 | 0.0058 | 0.0180 | Yes | 264-311 |
| | 30 | (Fe+impurity)_{bal.}Cu_{1.3}B₁₄.₁Si_{1.1}Nb_{0.5} | 0.180 | 0.0810 | 0.19 | 0.0057 | 0.0175 | Yes | 83.2-114 |

### (Example 3)

Each of the molten alloys having various compositions shown in Table 2 was quenched by a single roll method, and thereby substantially 30 kg of a thin ribbon of the amorphous alloy having a width of 30 mm and a thickness of 18 µm was obtained. Whether there were crystal grains in the alloy thin ribbon or not and crystal grain diameters thereof were investigated by use of X-ray diffraction, and thereby the alloy thin ribbon was found made of an amorphous single phase. Each of the alloy thin ribbons was slit into a width of 5 mm to investigate the presence of breakdown of the thin ribbon during slitting. Furthermore, 25 samples were collected from a thin ribbon corresponding to the vicinity of a center in a width direction of the slit thin ribbon over a top portion to an end portion thereof. The thin ribbon was wound into an outer diameter of 19 mm and an inner diameter of 15 mm to prepare a magnetic wound core. The magnetic wound core was annealed at a temperature in the range of 500°C to 570°C, followed by evaluating coercive force and variation in magnetic core loss Pcv at 100 kHz and 0.2 T of the annealed magnetic wound core. It was found that the annealed magnetic alloys all contained in at least a part of the structure thereof crystal grains having a crystal grain diameter of 60 nm or less (not including 0). Furthermore, a nanocrystalline grain phase was present at a volume fraction of 50% or more in an amorphous matrix phase. In Table 2, impurity components, the presence of breakdown of a thin ribbon during slitting it and ranges of coercive forces after annealing of 25 samples are shown. The thin ribbons of amorphous alloys of the present invention are more unlikely to break during processing than an alloy thin ribbon where the amounts of impurities are beyond the range of the present invention, have a coercive force after annealing less in variation and low in value in the Fe-based alloys of the present invention and are excellent in mass-productivity and soft magnetic properties. The magnetic core loss was less in variation and had a smaller value in the Fe-based alloy of the present invention as well as a coercive force.

**[Table 2]**

| | No. | Composition (atomic%) | Impurity component (% by mass) | | | | | Breakdown | Coercive force H_{c} (A/m) |
|---|---|---|---|---|---|---|---|---|---|
| | | | Al | S | Mn | N | O | | |
| Examples of Present Invention | 31 | (Fe+impurity)_{bal.}Cu_{1.1}Nb_{2.9}Si_{15.5}B_{6.8} | 0.007 | 0.0045 | 0.06 | 0.0032 | 0.0025 | No | 0.6-0.8 |
| | 32 | (Fe+impurity)_{bal.}Cu_{0.9}Nb_{3.1}Si_{13.5}B_{8.8} | 0.002 | 0.0025 | 0.15 | 0.0014 | 0.0122 | No | 0.5-0.7 |
| | 33 | (Fe+impurity)_{bal.}Cu_{0.8}Mo_{3.5}Si_{14.5}B_{8.9} | 0.011 | 0.0051 | 0.17 | 0.0033 | 0.0111 | No | 0.8-1.1 |
| | 34 | (Fe+impurity)_{bal.}Cu_{0.9}Ta_{2.5}Si_{13.8}B_{9.1} | 0.005 | 0.0011 | 0.03 | 0.0010 | 0.0014 | No | 0.9-1.2 |
| | 35 | (Fe+impurity)_{bal.}Cu_{1.5}Nb_{3.1}Si_{11.5}B_{8.9} | 0.006 | 0.0051 | 0.24 | 0.0069 | 0.0081 | No | 0.8-1.2 |
| | 36 | (Fe+impurity)_{bal.}Cu_{0.9}Nb_{2.1}Si_{15.5}B_{7.3} | 0.007 | 0.0014 | 0.22 | 0.0072 | 0.0080 | No | 1.2-1.5 |
| | 37 | (Fe+impurity)_{bal.}Cu_{0.9}Zr_{3.1}Si_{13.5}B_{8.6} | 0.008 | 0.0030 | 0.32 | 0.0051 | 0.0112 | No | 0.8-1.1 |
| | 38 | (Fe+impurity)_{bal.}Cu_{0.9}Hf_{3.1}Si_{13.5}B_{8.5} | 0.002 | 0.0040 | 0.16 | 0.0061 | 0.0132 | No | 0.7-1.0 |
| | 39 | (Fe+impurity)_{bal.}Cu_{0.9}W_{3.1}Si_{13.7}B_{8.7} | 0.003 | 0.0050 | 0.18 | 0.0045 | 0.0050 | No | 1.2-1.5 |
| | 40 | (Fe+impurity)_{bal.}Cu_{0.9}Nb_{2.1}Ti_{1.1}Si_{13.7}B_{8.7} | 0.005 | 0.0052 | 0.15 | 0.0045 | 0.0081 | No | 1.8-2.1 |
| | 41 | (Fe+impurity)_{bal.}Cu_{0.9}Nb_{2.5}V_{1.5}Si_{13.7}B_{8.7} | 0.004 | 0.0050 | 0.10 | 0.0053 | 0.0099 | No | 1.7-2.0 |
| | 42 | (Fe+impurity)_{bal.}Cu_{0.6}Nb_{0.5}Si_{16.5}B_{6.5} | 0.006 | 0.0048 | 0.07 | 0.0060 | 0.0078 | No | 1.0-1.3 |
| | 43 | (Fe+impurity)_{bal.}Cu_{0.9}Nb_{2.5}Cr_{0.5}Si_{13.8}B_{8.8} | 0.006 | 0.0044 | 0.08 | 0.0051 | 0.0081 | No | 0.7-1.0 |
| | 44 | (Fe+impurity)_{bal.}Cu_{0.9}Nb_{1.8}Si_{13.1}B₁₁ | 0.004 | 0.0043 | 0.11 | 0.0044 | 0.0084 | No | 1.5-1.8 |
| | 45 | (Fe+impurity)_{bal.}Co_{0.8}Nb_{3.2}Si_{13.8}B_{8.6} | 0.007 | 0.0045 | 0.17 | 0.0034 | 0.0090 | No | 1.3-1.6 |
| | 46 | (Fe+impurity)_{bal.}Ni_{0.7}Nb_{3.1}Si_{13.6}B_{8.8} | 0.008 | 0.0046 | 0.04 | 0.0040 | 0.0091 | No | 1.2-1.5 |
| | 47 | (Fe+impurity)_{bal.}Cu_{0.9}Nb_{3.1}Si_{13.6}B_{8.7}P_{0.4} | 0.007 | 0.0048 | 0.07 | 0.0038 | 0.0027 | No | 0.6-0.8 |
| | 48 | (Fe+impurity)_{bal.}Cu_{0.9}Nb_{3.1}Si_{13.5}B_{8.9}Ge_{0.3} | 0.008 | 0.0045 | 0.09 | 0.0042 | 0.0023 | No | 0.5-0.8 |
| | 49 | (Fe+impurity)_{bal.}Cu_{1.0}Nb_{3.0}Si_{13.4}B_{8.8}Sn_{0.1} | 0.007 | 0.0041 | 0.14 | 0.0052 | 0.0035 | No | 0.6-0.8 |
| | 50 | (Fe+impurity)_{bal.}Cu_{1.0}Nb_{3.1}Si_{14.4}B_{8.5}Au_{0.1} | 0.007 | 0.0045 | 0.16 | 0.0031 | 0.0029 | No | 0.7-0.9 |
| | 51 | (Fe+impurity)_{bal.}Cu_{1.0}Nb_{3.1}Si_{14.8}B_{8.4}Pd_{0.1} | 0.003 | 0.0065 | 0.18 | 0.0032 | 0.0025 | No | 0.7-0.9 |
| | 52 | (Fe+impurity)_{bal.}Cu_{1.1}Nb_{3.4}Si_{16.5}B_{5.5} | 0.007 | 0.0045 | 0.06 | 0.0032 | 0.0025 | No | 0.7-1.0 |
| | 53 | (Fe+impurity)_{bal.}Cu_{1.0}Nb_{7.1}B_{8.9} | 0.01 | 0.0489 | 0.49 | 0.0938 | 0.0997 | No | 2.4-2.7 |
| Comparative Example | 54 | (Fe+impurity)_{bal.}Cu_{1.2}Nb_{3.2}Si_{15.5}B_{7.0} | 0.121 | 0.0724 | 0.78 | 0.0125 | 0.0098 | Yes | 259-356 |
| | 55 | (Fe+impurity)_{bal.}Cu_{1.1}Mo_{3.5}Si_{15.5}B_{7.8} | 0.189 | 0.0089 | 0.75 | 0.0059 | 0.0098 | Yes | 284-556 |
| | 56 | (Fe+impurity)_{bal.}Cu_{1.1}Nb_{3.5}Si_{14.5}B_{7.5} | 0.094 | 0.0823 | 0.18 | 0.0069 | 0.0058 | Yes | 224-502 |
| | 57 | (Fe+impurity)_{bal.}Cu_{1.1}Nb_{7.0}B_{8.8} | 0.087 | 0.0686 | 0.19 | 0.0054 | 0.0128 | Yes | 294-582 |

## Claims

1. An Fe-based soft magnetic alloy comprising:
in terms of atomic percent,
Cu in an amount (x) satisfying 0.1 ≤ x ≤ 3;
B in an amount (y) satisfying 10 ≤ y ≤ 20; and
Fe and impurities as the remainder; and,
as the impurities, in terms of percent by mass,
Al: 0.01% or less;
S: 0.001 to 0.05%;
Mn: 0.01 to 0.5%;
N: 0.001 to 0.1%; and
O: 0.1% or less,
wherein at least a part of the structure thereof contains a crystal phase having a crystal grain diameter of 60 nm or less (not including 0).

2. An Fe-based soft magnetic alloy comprising:
in terms of atomic percent,
Cu in an amount (x) satisfying 0.1 ≤ x ≤ 3;
B in an amount (y) satisfying 4 ≤ y ≤ 20;
X in an amount (z) satisfying 0 < z ≤ 20 and 10 ≤ y + z ≤ 30; and
Fe and impurities as the remainder (wherein, X represents at least one element selected from the group consisting of Si, C, Ge, Ga, Be, and P); and,
as the impurities, in terms of percent by mass,
Al: 0.01% or less;
S: 0.001 to 0.05%;
Mn: 0.01 to 0.5%;
N: 0.001 to 0.1%; and
O: 0.1% or less,
wherein at least a part of the structure thereof contains a crystal phase having a crystal grain diameter of 60 nm or less (not including 0).

3. An Fe-based soft magnetic alloy comprising:
in terms of atomic percent,
Cu in an amount (x) satisfying 0.1 ≤ x ≤ 3;
B in an amount (y) satisfying 4 ≤ y ≤ 20;
X in an amount (z) satisfying 0 ≤ z ≤ 20; and
M in an amount of (a) satisfying 10 ≤ y + z + a ≤ 30 (wherein, X represents at least one element selected from the group consisting of Si, C, Ge, Ga, Be, and P and M represents at least one element selected from the group consisting of Ti, Zr, Hf, V, Nb, Ta, Mo, and W); and,
as impurities, in terms of percent by mass,
Al: 0.01% or less;
S: 0.001 to 0.05%;
Mn: 0.01 to 0.5%;
N: 0.001 to 0.1%; and
O: 0.1% or less,
wherein at least a part of the structure thereof contains a crystal phase having a crystal grain diameter of 60 nm or less (not including 0).

4. The Fe-based soft magnetic alloy according to claim 2 or 3, wherein the X is Si.

5. The Fe-based soft magnetic alloy according to any one of claims 1 to 4, wherein the Fe-based soft magnetic alloy contains at least one element selected from the group consisting of Co and Ni by less than 50 atomic % with respect to the amount of Fe.

6. The Fe-based soft magnetic alloy according to any one of claims 1 to 5, wherein the Fe-based soft magnetic alloy contains at least one element selected from the group consisting of Cr, Re, platinum group elements, Au, Ag, Zn, In, Sn, As, Sb, Sb, Bi, Y and rare earth elements by less than 5 atomic % with respect to the amount of Fe.

7. A magnetic part, comprising:
the Fe-based soft magnetic alloy according to any one of claims 1 to 6.

8. A thin ribbon of an amorphous alloy comprising:
in terms of atomic percent,
Cu in an amount (x) satisfying 0.1 ≤ x ≤ 3;
B in an amount (y) satisfying 10 ≤ y ≤ 20; and
Fe and impurities as the remainder; and,
as the impurities, in terms of percent by mass,
Al: 0.01% or less;
S: 0.001 to 0.05%;
Mn: 0.01 to 0.5%;
N: 0.001 to 0.1%; and
O: 0.1% or less.

9. A thin ribbon of an amorphous alloy comprising:
in terms of atomic percent,
Cu in an amount (x) satisfying 0.1 ≤ x ≤ 3;
B in an amount (y) satisfying 4 ≤ y ≤ 20;
X in an amount (z) satisfying 0 < z ≤ 20 and 10 ≤ y + z ≤ 30; and
Fe and impurities as the remainder (wherein, X represents at least one element selected from Si, C, Ge, Ga, Be and P); and,
as the impurities, in terms of percent by mass,
Al: 0.01% or less;
S: 0.001 to 0.05%;
Mn: 0.01 to 0.5%;
N: 0.001 to 0.1%; and
O: 0.1% or less.

10. A thin ribbon of an amorphous alloy comprising:
in terms of atomic percent,
Cu in an amount (x) satisfying 0.1 ≤ x ≤ 3;
B in an amount (y) satisfying 4 ≤ y ≤ 20;
X in an amount (z) satisfying 0 ≤ z ≤ 20; and
M in an amount (a) satisfying 10 ≤ y + z + a ≤ 30 (wherein, X represents at least one element selected from the group consisting of Si, C, Ge, Ga, Be, and P and M represents at least one element selected from the group consisting of Ti, Zr, Hf, V, Nb, Ta, Mo, and W); and,
as impurities, in terms of percent by mass,
Al: 0.01% or less;
S: 0.001 to 0.05%;
Mn: 0.01 to 0.5%;
N: 0.001 to 0.1%; and
O: 0.1% or less.

11. The thin ribbon of an amorphous alloy according to claim 9 or 10, wherein the X is Si.

12. The thin ribbon of an amorphous alloy according to any one of claims 8 to 11, wherein the Fe-based soft magnetic alloy contains at least one element selected from the group consisting of Co and Ni by less than 50 atomic % with respect to the amount of Fe.

13. The thin ribbon of an amorphous alloy according to any one of claims 8 to 12, **characterized in that** the Fe-based soft magnetic alloy contains at least one element selected from the group consisting of Cr, Re, platinum group elements, Au, Ag, Zn, In, Sn, As, Sb, Sb, Bi, Y and rare earth elements by less than 5 atomic % with respect to the amount of Fe.
